# EUROPÄISCHE PATENTSCHRIFT

(11) **EP 3 073 134 B1**
(45) Veröffentlichungstag und Bekanntmachung des Hinweises auf die Patenterteilung: **02.10.2019**
(21) Anmeldenummer: 16157925.5
(22) Anmeldetag: 29.02.2016
(51) Int. Cl.: F16C 11/06, B23K 11/26, B23K 33/00

(54) **VERFAHREN ZUR HERSTELLUNG EINER FAHRWERKBAUGRUPPE UND FAHRWERKBAUGRUPPE HERGESTELLT NACH EINEM SOLCHEN VERFAHREN**
METHOD FOR PRODUCING A CHASSIS ASSEMBLY AND CHASSIS ASSEMBLY PRODUCED BY MEANS OF SUCH A METHOD
PROCÉDÉ DE FABRICATION D'UN ENSEMBLE CHASSIS ET ENSEMBLE CHASSIS FABRIQUE SELON UN TEL PROCÉDÉ

(30) Priorität: 27.03.2015 DE 102015205628
(43) Veröffentlichungstag der Anmeldung: 28.09.2016
(73) Patentinhaber: ZF Friedrichshafen AG, 88046 Friedrichshafen (DE)
(72) Erfinder: Eulerich, Wolfgang, 49086 Osnabrück (DE); Welzel, Andreas, 49191 Belm (DE); Kohlbrecher, Guido, 49134 Wallenhorst (DE)

(56) Entgegenhaltungen:
- DE-A1-102006 008 252
- JP-A- H06 156 032
- JP-A- 2006 144 945
- US-A1- 2011 104 511

## Beschreibung

Die Erfindung betrifft ein Verfahren zur Herstellung einer Fahrwerkbaugruppe und eine Fahrwerkbaugruppe hergestellt nach einem solchen Verfahren gemäß den Oberbegriffen der unabhängigen Patentansprüche.

Fahrwerkbaugruppen der genannten Art sind in vielerlei Ausgestaltungen bekannt. In der Regel weisen diese ein Strukturbauteil und ein oder mehrere mit diesem fest verbundene Kugelgelenke auf. Beispielsweise bildet eine solche Fahrwerkbaugruppe einen Fahrwerkslenker, wobei die Integration des Kugelgelenks in das Strukturbauteil im Regelfall durch Umspritzen, Einpressen, Anschrauben, Annieten oder Verschweißen erfolgt.

Bei einer aus der JP H06 156032 A bekannten Ausführung ist ein von einem Schweißflansch umgebenes Kugelgelenkgehäuse in ein Loch eines Aufhängungsarms eingesetzt. Der Schweißflansch und der Aufhängungsarm sind durch eine Widerstandsschweißung miteinander verbunden.

In der US 2011/104511 A1 ist eine Verbindungsanordnung offenbart, bei der ein Zahnkranz, der eine Öffnung aufweist, und ein Differentialgehäuse durch eine Widerstandsschweißung miteinander verbunden sind. Dabei sind die beiden Fügepartner an zwei zueinander beabstandeten Verbindungsstellen miteinander verbunden. Zwischen den beiden Verbindungsstellen befindet sich ein Spalt, in dem die beiden Fügepartner nicht in Kontakt miteinander stehen.

Aus gattungsbildenden DE 203 11 595 U1 ist ein Kugelgelenk mit einem Kugelgelenkgehäuse bekannt, welches einen Schweißabschnitt aufweist, mittels dem es an einem Strukturbauteil, insbesondere einen Fahrwerkslenker, angeschweißt werden kann, wobei das Kugelgelenkgehäuse in eine Durchgangsöffnung des Strukturbauteils eingesetzt ist und der Schweißabschnitt des Kugelgelenkgehäuses mit dem Strukturbauteil verschweißt ist. In einer Ausgestaltung ist der Schweißabschnitt einseitig abgeschrägt ausgeführt, und zwar mit der Seite, die dafür vorgesehen ist, am Rand der Durchgangsöffnung im Strukturbauteil anzuliegen.

Aufgabe der Erfindung ist es, ein Verfahren und ein Erzeugnis bereitzustellen, durch welches es ermöglicht wird, das Kugelgelenkgehäuse in der Durchgangsöffnung zusätzlich zu stabilisieren, um die Übertragung höherer Kräfte und Momente von dem Kugelgelenk auf das Strukturbauteil und umgekehrt zu ermöglichen.

Diese Aufgabe wird gemäß der vorliegenden Erfindung gelöst durch ein gattungsgemäßes Verfahren zur Herstellung einer Fahrwerkbaugruppe sowie eine Fahrwerkbaugruppe, welche zusätzlich die kennzeichnenden Merkmale der unabhängigen Patentansprüche aufweisen.

Bevorzugte Ausführungsformen und Weiterbildungen sind Gegenstand der Unteransprüche.

Die Erfindung sieht demnach ein Verfahren zur Herstellung einer Fahrwerkbaugruppe vor, aufweisend ein Strukturbauteil mit einer Durchgangsöffnung, in welche ein Kugelgelenkgehäuse eingesetzt wird. Der Außenumfang des Kugelgelenkgehäuses wird umlaufend mit einem randseitigen Abschnitt der Durchgangsöffnung durch stoffschlüssiges Fügen ohne Zusatzwerkstoff verbunden.

Erfindungsgemäß wird das Kugelgelenkgehäuse zur Stabilisierung in der Durchgangsöffnung zusätzlich umlaufend mit zumindest einem von dem randseitigen Abschnitt beabstandeten Innenwandungsabschnitt der Durchgangsöffnung ebenfalls durch stoffschlüssiges Fügen ohne Zusatzwerkstoff verbunden, wobei die zusätzliche Verbindung geringfügig von dem dem randseitigen Abschnitt gegenüberliegenden Rand der Durchgangsöffnung beabstandet ist.

Unter einem Strukturbauteil im Sinne der Erfindung ist ein flächenhaftes Metallblechteil zu verstehen, welches gekrümmt oder eben oder teilweise gekrümmt und teilweise eben ausgebildet ist. Flächenhaft bedeutet, dass die Materialstärke des Strukturbauteils sehr viel geringer als die übrigen Abmessungen ist. Die Materialstärke ist vorzugsweise konstant über die flächenhafte Erstreckung des Strukturbauteils, welches insbesondere massiv ausgebildet ist. Alternativ kann das Strukturbauteil auch aus mehreren Blechzuschnitten zusammengesetzt sein, die durch stoffschlüssiges Fügen miteinander verbunden sind. Derartige Strukturbauteile, welche typischerweise aus Blechzuschnitten unterschiedlicher Werkstoffgüten und/oder Materialstärken, sogenannten Tailored Blanks, zusammengesetzt sind, werden beispielsweise durch Tiefziehen oder Pressen hergestellt.

Unter einer Durchgangsöffnung ist im Sinne der Erfindung eine runde oder unrunde, das Strukturbauteil durchdringende Ausnehmung zu verstehen. Die Durchgangsöffnung wird vorzugsweise vollständig umlaufend von dem Strukturbauteil umschlossen. Das Kugelgelenkgehäuse ist insbesondere geeignet zur Aufnahme einer Gelenkkugel eines Kugelzapfens. Es ist bevorzugt topfförmig mit einem im Wesentlichen hohlzylindrischen Teil und einem einstückig damit verbundenen Bodenteil ausgebildet. Alternativ kann ein solches Kugelgelenkgehäuse auch ohne einstückig mit diesem verbundenen Bodenteil ausgebildet sein. Die Herstellung des Kugelgelenkgehäuses erfolgt bevorzugt durch Fließpressen, insbesondere Kaltfließpressen. Die Herstellung kann alternativ auch durch Tiefziehen, Zerspanen oder Warmfließpressen erfolgen.

Unter einem randseitigen Abschnitt der Durchgangsöffnung ist ein Abschnitt der Durchgangsöffnung zu verstehen, der einem der Ränder der Durchgangsöffnung zugeordnet ist. Unter einem Rand der Durchgangsöffnung ist im Zusammenhang mit der Erfindung die Schnittlinie zu verstehen, die aus der Innenwandung der Durchgangsöffnung und einer der beiden großen Oberflächen des Strukturbauteils, die um das Maß der Materialstärke beabstandet sind, gebildet wird. Die umlaufende Verbindung des Außenumfangs des Kugelgelenkgehäuses mit dem randseitigen Abschnitt der Durchgangsöffnung durch stoffschlüssiges Fügen ohne Zusatzwerkstoff kann derart angeordnet sein, dass die Verbindung geringfügig von einem Rand der Durchgangsöffnung beabstandet ist oder dass die Verbindung genau bis zum Rand reicht oder dass der Rand innerhalb der Verbindung liegt, also die Verbindung sich über den randseitigen Abschnitt bis in eine der großen Oberflächen des Strukturbauteils erstreckt.

Die umlaufenden Verbindungen des Außenumfangs des Kugelgelenkgehäuses mit dem Strukturbauteil erstrecken sich vorzugsweise parallel zu den Rändern der Durchgangsöffnung. Die zusätzliche umlaufende Verbindung des Kugelgelenkgehäuses mit zumindest einem von dem randseitigen Abschnitt beabstandeten Innenwandungsabschnitt der Durchgangsöffnung ist erfindungsgemäß derart angeordnet, dass die zusätzliche Verbindung geringfügig von dem dem randseitigen Abschnitt gegenüberliegenden Rand beabstandet ist. Das Kugelgelenkgehäuse kann umlaufend mit genau einem von dem randseitigen Abschnitt beabstandeten Innenwandungsabschnitt oder mit mehreren von dem randseitigen Abschnitt beabstandeten Innenwandungsabschnitten der Durchgangsöffnung verbunden werden.

Durch die zusätzliche Verbindung wird das Kugelgelenkgehäuse in der Durchgangsöffnung stabilisiert. Da die umlaufenden Verbindungen des Außenumfangs des Kugelgelenkgehäuses mit dem Strukturbauteil voneinander beabstandet sind, können auf das Kugelgelenkgehäuse einwirkende Kipp- oder Biegemomente besonders gut aufgenommen und in das Strukturbauteil eingeleitet werden. Die Fügepartner Strukturbauteil und Kugelgelenkgehäuse weisen bevorzugt keine Oberflächenbeschichtung auf. Dies hat den Vorteil, dass vor dem stoffschlüssigen Fügen ohne Zusatzwerkstoff keine separate Vorbehandlung der Oberfläche der Fügepartner erforderlich ist.

Bevorzugt ist oder sind die Innenwandung der Durchgangsöffnung und/oder die dieser zugewandte Außenumfangsfläche des Kugelgelenkgehäuses zumindest vor dem Fügen konturiert ausgebildet. Unter einer konturierten Ausbildung im Sinne der Erfindung ist in Bezug auf die Innenwandung der Durchgangsöffnung eine Innenwandung zu verstehen, die bei einem beliebigen Schnitt durch die Mittelachse der Durchgangsöffnung nicht gerade ausgebildet ist. Folglich kann eine nicht konturierte Innenwandung beispielsweise die Form einer Zylindermantelfläche oder einer Kegelstumpfmantelfläche aufweisen. Gleiches gilt analog für die der Innenwandung der Durchgangsöffnung im gefügten Zustand zugewandte Außenumfangsfläche des Kugelgelenkgehäuses. Durch die Konturierung der Innenwandung der Durchgangsöffnung und/oder der der Innenwandung zugewandten Außenumfangsfläche des Kugelgelenkgehäuses können optimale geometrische Verhältnisse für stoffschlüssiges Fügen ohne Zusatzwerkstoff der beiden Fügepartner Kugelgelenkgehäuse und Strukturbauteil geschaffen werden. Es können die Innenwandung der Durchgangsöffnung und gleichzeitig auch die dieser zugewandte Außenumfangsfläche des Kugelgelenkgehäuses zumindest vor dem Fügen konturiert ausgebildet sein. Ist nur die Innenwandung der Durchgangsöffnung oder die dieser zugewandte Außenumfangsfläche des Kugelgelenkgehäuses konturiert ausgebildet, so ist die nicht konturiert ausgebildete Innenwandungs- oder Außenumfangsfläche bevorzugt als Kegelstumpfmantelfläche ausgebildet. Die Konturierung kann sich über die gesamte Innenwandung der Durchgangsöffnung und/oder die dieser zugewandte Außenumfangsfläche des Kugelgelenkgehäuses oder über Teilbereiche dieser Flächen erstrecken.

Vorteilhaft wird die Innenwandung der Durchgangsöffnung durch Umformen, insbesondere durch Prägen, fertiggestellt.

Dabei wird vorteilhaft zunächst die Durchgangsöffnung eingebracht, beispielsweise durch Lochen mittels Stanzwerkzeug. Vor oder nach dem Umformen zur Erzeugung einer konturierten Innenwandung der Durchgangsöffnung können noch weitere Arbeitsschritte zur Fertigstellung des Strukturbauteils wie Biegen, Tiefziehen, Abkanten oder Ausschneiden erfolgen. Das Umformen der Innenwandung der Durchgangsöffnung erfolgt insbesondere durch Prägen. Auf diese Weise kann die konturierte Innenwandung der Durchgangsöffnung wirtschaftlich in einem Arbeitshub fertiggestellt werden. Strukturbauteile mit einer Durchgangsöffnung, deren Innenwandungen durch Umformen fertiggestellt werden, können im Rahmen einer Serien- oder Massenfertigung wirtschaftlich in Folgeverbundwerkzeugen oder auf Transferstraßen erfolgen.

Gemäß einer Weiterbildung der Erfindung wird die der Innenwandung der Durchgangsöffnung zugewandte Außenumfangsfläche des Kugelgelenkgehäuses durch ein abschließendes Zerspanen, insbesondere ein Zerspanen in einer Aufspannung, fertiggestellt. Durch das Zerspanen, insbesondere Drehen, wird eine definierte Geometrie für das stoffschlüssige Fügen reproduzierbar und mit hoher maßlicher Genauigkeit hergestellt. Damit bei voneinander beabstandeten Fügestellen auch die Genauigkeit in Bezug auf die Lage der Fügestellen zueinander gegeben ist, erfolgt das abschließende Zerspanen in einer Aufspannung. Auf diese Weise werden durch ein bei mehreren Zerspanoperationen erforderliches Umspannen bedingte Ungenauigkeiten vermieden. Bei einem Fügen mit Zusatzwerkstoff können maßliche Abweichungen in begrenztem Umfang durch Zusatzwerkstoffe wie Elektrodenmaterial oder Schweißdrahtmaterial ausgeglichen werden. Da dies beim Fügen ohne Zusatzwerkstoff nicht möglich ist, kommt der maßlichen Genauigkeit im Bereich der Fügestellen hier eine besondere Bedeutung zu, um in einer Serienfertigung prozesssicher ein gleichbleibend hohes Qualitätsniveau gewährleisten zu können.

Das Kugelgelenkgehäuse wird vor dem abschließenden Zerspanen bevorzugt durch Fließpressen hergestellt. Verfahrensbedingt sind hier keine hinterschnittigen Geometriebereiche, die auch als Hinterschneidungen bezeichnet werden, darstellbar. Unter Hinterschneidungen sind in diesem Zusammenhang störende Geometriebereiche an einem durch Urformen oder Umformen hergestellten Bauteil zu verstehen, die ein Entformen des Bauteils nach dessen Fertigstellung aus der Urform oder dem Umformwerkzeug verhindern. Durch das abschließende Zerspanen können darüber hinaus nachträglich hinterschnittige Geometriebereiche in das Kugelgelenkgehäuse eingebracht werden. So kann beispielsweise eine Dichtungsbalgnut zur späteren Aufnahme eines Dichtungsbalges in einem Arbeitsgang mit dem abschließenden Zerspanen in das Kugelgelenkgehäuse eingebracht werden.

Bevorzugt werden das Strukturbauteil und das Kugelgelenkgehäuse als Vorbereitung zum Fügen entlang einer Fügeachse derart zusammengeführt, dass sich die Innenwandung der Durchgangsöffnung und die dieser zugewandte Außenumfangsfläche des Kugelgelenkgehäuses gleichzeitig in einem ersten, vorzugsweise geschlossenen, und zumindest einem zweiten, vorzugsweise geschlossenen, Linienzug berühren. Dieser reproduzierbare Zustand ist gut geeignet als definierter Ausgangszustand für das nachfolgende stoffschlüssige Fügen ohne Zusatzwerkstoff, weil die Prozessparameter für das Fügen gut darauf abgestimmt werden können. Unter einer Fügeachse im Sinne der vorliegenden Erfindung ist eine geradlinige Bewegungsbahn zu verstehen, entlang der die zu Fügepartner translatorisch zum Fügen zusammengeführt werden und die gleichzeitig die Wirkungslinie der Kraft darstellt, mit der die Fügepartner gefügt werden. Die Fügeachse durchdringt die vorzugsweise als Kreisflächen ausgebildeten Flächen, die durch den ersten und durch den zumindest zweiten Linienzug aufgespannt werden. Das Zusammenführen der Fügepartner entlang der Fügeachse erfolgt derart, dass sich das Strukturbauteil und das Kugelgelenkgehäuse in dem ersten und in dem zumindest zweiten Linienzug gleichzeitig über die jeweiligen Gesamtlängen der einzelnen Linienzüge berühren. Die gleichzeitige Linienberührung der Fügepartner hat den Vorteil, dass sich die Kraft, mit der die Fügepartner bei deren Berührung aufeinandertreffen, im Gegensatz zu einer Punktberührung, über den gesamten Linienzug verteilt. Darüber hinaus sind die beiden Fügepartner durch die gleichzeitige Berührung in ihrer Lage zum Fügen vorbereitet, so dass keine weitere Relativbewegung der Fügepartner im Bereich der Linienzüge erforderlich ist. Dadurch werden Beschädigungen in Form von unerwünschten Verkratzungen und/oder Verformungen der Fügepartner im Bereich der Linienzüge vermieden.

Vorteilhaft sind zumindest zwei Linienzüge parallel zueinander und in Richtung der Fügeachse versetzt angeordnet. Durch die in Richtung der Fügeachse versetzt angeordneten Linienzüge wird das Kugelgelenkgehäuse in der Durchgangsöffnung des Strukturbauteils zusätzlich stabilisiert. Die Stabilisierung ist dabei umso größer, je mehr die zumindest zwei Linienzüge versetzt zueinander angeordnet sind, also je größer das Abstandsmaß zwischen den Linienzügen ist. Es können genau zwei Linienzüge oder auch mehr als zwei Linienzüge parallel zueinander und in Richtung der Fügeachse versetzt angeordnet sein.

Besonders vorteilhaft sind die Mittelachse des Kugelgelenkgehäuses und die Mittelachse der Durchgangsöffnung deckungsgleich mit der Fügeachse. Die Fügeachse erstreckt sich in diesem Fall bevorzugt senkrecht zu den Flächen, die durch die Linienzüge aufgespannt werden. Derartige Verhältnisse sind beispielsweise gegeben, wenn ein rotationssymmetrisches Kugelgelenkgehäuse mit einem Strukturbauteil mit kreisrunder Durchgangsöffnung gefügt wird. Die rotationssymmetrische Ausbildung des Kugelgelenkgehäuses hat den Vorteil, dass das abschließende Zerspanen durch relativ kostengünstiges Drehen erfolgen kann. Die Linienzüge sind bei dieser bevorzugten Ausführung als Kreislinien ausgebildet, die jeweils eine Kreisfläche umschließen, wobei die Mittelsenkrechten dieser Kreisflächen ebenfalls deckungsgleich mit der Fügeachse sind. Erstreckt sich die Fügeachse senkrecht zu den Flächen, die durch die Linienzüge aufgespannt werden, und verläuft sie durch den jeweiligen Mittelpunkt dieser Flächen, treten beim Fügevorgang keine unerwünschten Querkräfte auf, die im Verlauf des Fügens zu einem unerwünschten Versatz der Fügepartner im Bereich der Linienzüge führen könnten.

Gemäß einer Ausgestaltung der Erfindung ist oder sind die Konturierung der Innenwandung der Durchgangsöffnung und/oder der dieser zugewandten Außenumfangsfläche des Kugelgelenkgehäuses derart ausgebildet, dass bei Berührung im Bereich der Linienzüge, bei Betrachtung in einem Längsschnitt durch die Fügeachse, jeweils eine Kante auf eine Schräge trifft. Eine derartige Ausgestaltung der Linienzüge hat den Vorteil, dass sich die Bauteile vor dem Fügen geometriebedingt selbst zentrieren. Die Kanten sind dabei insbesondere dem Kugelgelenkgehäuse zugeordnet und werden insbesondere im Rahmen des abschließenden Zerspanens des Kugelgelenkgehäuses fertiggestellt. Bei Betrachtung in dem vorgenannten Schnitt, sind die Kanten bevorzugt im Wesentlichen rechtwinklig mit in Richtung der Fügeachse und senkrecht dazu verlaufenden Schenkeln ausgebildet. Die Kanten schließen also vorzugsweise einen Winkel von 90° ein. Die Schrägen sind insbesondere der Innenwandung der Durchgangsöffnung zugeordnet und durch Prägen hergestellt. Die Linienberührung der Fügepartner Kugelgelenkgehäuse und Strukturbauteil wird dadurch erreicht, dass die Kanten im Wesentlichen symmetrisch auf die Schrägen treffen. Damit ist gemeint, dass der Winkel zwischen der Schräge und dem ersten Schenkel der Kante im Wesentlichen gleich groß ist wie der Winkel, der von der Schräge und dem zweiten Schenkel der Kante eingeschlossen wird. Der Winkel, der von der Schräge und dem ersten sowie der Schräge und dem zweiten Schenkel der Kante eingeschlossen wird, beträgt vorzugsweise 45°.

In vorteilhafter Weiterbildung der Erfindung werden das Strukturbauteil und das Kugelgelenkgehäuse unmittelbar vor dem Fügen mit einer entlang der Fügeachse wirkenden Vorspannkraft beaufschlagt, um die Kanten im Bereich der Linienzüge mit den zugeordneten Schrägen vollständig zur Anlage zu bringen. Bedingt durch Fertigungstoleranzen kann es vorkommen, dass sich die Fügepartner vor dem Fügen nicht gleichzeitig über deren Gesamtlängen berühren. Durch das Aufbringen der entlang der Fügeachse wirkenden Vorspannkraft wird insbesondere eine leichte Verformung der Kanten in dem Bereich bewirkt, in dem sich die Fügepartner bereits ohne Einwirkung der Vorspannkraft berühren. Durch diese bereichsweise Verformung der Kanten wird ein Nachsetzen erreicht, so dass anschließend eine vollständige Linienberührung im Bereich der Linienzüge vorliegt. Die insbesondere dem Kugelgelenkgehäuse zugeordneten Kanten werden zu diesem Zweck im Rahmen des abschließenden Zerspanens vorzugsweise relativ scharfkantig ausgebildet, damit sich diese unter Einwirkung der Vorspannkraft relativ leicht verformen lassen.

Vorzugsweise erfolgt das stoffschlüssige Fügen ohne Zusatzwerkstoff durch Widerstandsschweißen, insbesondere durch Kondensatorentladungsschweißen. Beim Widerstandsschweißen fließt elektrischer Strom durch die Fügepartner sowie durch die Linienzüge, über deren Gesamtlängen sich die Fügepartner unmittelbar vor dem Beginn der Widerstandsschweißung berühren. Die Linienberührung hat den Vorteil, dass in diesem Bereich ein hoher Übergangswiderstand auftritt, der eine Erweichung der Fügepartner im Bereich der Linienzüge bewirkt. Die zuvor beschriebene Ausbildung der Kanten und Schrägen ist hierauf abgestimmt. Bei einer flächigen Anlage der Innenwandung der Durchgangsöffnung mit der dieser zugewandten Außenumfangsfläche des Kugelgelenkgehäuses, beispielsweise eine gemeinsame Anlagefläche in Form einer Kegelstumpf-Mantelfläche, wäre der Übergangswiderstand sehr gering. Eine belastbare Widerstandsschweißung wäre hier, insbesondere bei einem relativ dicken Strukturbauteil, nur relativ schwer umzusetzen, weil der Übergangswiderstand nicht ausreicht, um die Fügepartner im Bereich der gemeinsamen Anlagefläche zu erweichen.

Sind die Linienzüge umlaufend ausgeführt, wirken die Widerstandsschweißungen in dem umlaufend geschlossenen Bereich zwischen den Linienzügen abschirmend gegenüber korrosiven Medien. Der Bereich zwischen den umlaufenden Linienzügen oder - bei mehr als zwei umlaufenden Linienzügen - die Bereiche zwischen den Linienzügen ist bzw. sind also auch ohne zusätzlichen Oberflächenschutz korrosionsgeschützt.

Durch die zuvor beschriebene Linienberührung wird dagegen eine innige Verbindung der beiden Fügepartner Kugelgelenkgehäuse und Strukturbauteil durch das Widerstandsschweißen ermöglicht. Insbesondere beim Kondensatorentladungsschweißen wird die Wärmeeinflusszone aufgrund der verfahrensbedingt kurzen Schweißzeit und einer lokalen Energiekonzentration klein gehalten. Auf diese Weise werden ein Verzug der Fügepartner sowie unerwünschte Gefügeveränderungen im Bereich der Fügestellen weitestgehend vermieden. Der Wirkungsgrad des Kondensatorentladungsschweißens ist hoch, da es kaum zu einer Energieabfuhr durch Wärmeleitung kommt. Neben dem Kondensaterentladungsschweißen ist alternativ auch das Mittelfrequenzschweißen geeignet. Besonders gute Schweißergebnisse werden erreicht, wenn die Mittelachse des Kugelgelenkgehäuses und die Mittelachse der Durchgangsöffnung deckungsgleich mit der Fügeachse sind und die Linienzüge als Kreislinien ausgebildet sind.

Gemäß einer Weiterbildung der Erfindung wird die Verbindung zwischen dem Strukturbauteil und dem Kugelgelenkgehäuse zumindest bereichsweise durch ein stoffschlüssiges Fügen mit Zusatzwerkstoff verstärkt. An der Fahrwerkbaugruppe, welche das Kugelgelenkgehäuse und das Strukturbauteil aufweist, können im Einbauzustand im Fahrzeug lokale Lastspitzen im Bereich der Fügestellen zwischen Kugelgelenkgehäuse und Strukturbauteil auftreten. Derartige Lastspitzen können beispielsweise durch Bremsmanöver, Kurvenfahrten oder Bordsteinüberfahrungen hervorgerufen und durch Berechnungen und Versuche lokalisiert werden. Aus Wirtschaftlichkeits- und aus Gewichtsgründen wird angestrebt, die Fahrwerkbaugruppe nur im Bereich dieser Lastspitzen zu verstärken. Da die gleiche Fahrwerkbaugruppe weiterhin häufig in unterschiedlichen Fahrzeugmodellen verwendet wird, kann es vorkommen, dass die zumindest bereichsweise Verstärkung der Verbindung zwischen dem Strukturbauteil und dem Kugelgelenkgehäuse durch ein stoffschlüssiges Fügen mit Zusatzwerkstoff abhängig vom Fahrzeugmodell unterschiedlich auszuführen ist. Die Verfahren des stoffschlüssigen Fügens mit Zusatzwerkstoff bieten hier die notwendige Flexibilität, ohne dass zusätzliche Anlageninvestitionen erforderlich werden.

Vorteilhaft erfolgt das stoffschlüssige Fügen mit Zusatzwerkstoff durch Schutzgasschweißen, insbesondere durch MAG-Schweißen. Bei dem Schutzgasschweißen handelt es sich um ein Lichtbogenschweißverfahren, bei dem ein abschmelzender Schweißdraht von einem Motor mit veränderbarer Geschwindigkeit kontinuierlich nachgeführt wird. Gleichzeitig mit dem Drahtvorschub wird der Schweißstelle über eine Düse ein Schutz- oder Mischgas zugeführt. Das Schutzgasschweißen hat den Vorteil, dass es sich einfach automatisieren lässt. Schutzgas-Schweißroboter können ohne größeren Rüstaufwand auf die jeweiligen Parameter wie beispielsweis Schweißnahtquerschnitt, -lage und -länge der zumindest bereichsweisen Verstärkung der Verbindung zwischen dem Strukturbauteil und dem Kugelgelenkgehäuse angepasst werden. Das Metallaktivgasschweißen (MAG) ist insbesondere für Stahlwerkstoffe geeignet.

Die Erfindung bezieht sich ferner auf eine Fahrwerkbaugruppe aufweisend ein Strukturbauteil und ein Kugelgelenkgehäuse, welche Fahrwerkbaugruppe nach einem Verfahren, wie zuvor beschrieben, hergestellt wird. Die Erfindung schlägt vor, dass die Fahrwerkbaugruppe als Flanschgelenk oder als Mehrpunktlenker ausgebildet ist. Unter einem Flanschgelenk im Sinne der Erfindung ist eine Fahrwerkbaugruppe zu verstehen, die aus einem Kugelgelenk und einem Anbindungsflansch gebildet ist, wobei der Anbindungsflansch zur Anbindung des Flanschgelenks an ein weiteres Fahrwerkbauteil, beispielsweise ein Lenkerbauteil, dient. Unter einem Mehrpunktlenker im Sinne der Erfindung ist ein Fahrwerkslenker mit mehr als einem Gelenkpunkt zu verstehen, wobei mindestens einer der Gelenkpunkte ein Kugelgelenk aufweist. Mit Bezug auf die Anzahl der Gelenkpunkte werden diese Fahrwerkslenker beispielsweise auch als Zwei-, Drei- oder Vierpunktlenker bezeichnet.

Nach dem Einsetzen des Kugelgelenkgehäuses in die Durchgangsöffnung des Strukturbauteils und dem anschließenden stoffschlüssigen Fügen von Strukturbauteil und Kugelgelenkgehäuse sind keine weiteren Schweißoperationen an der als Flanschgelenk oder als Mehrpunktlenker ausgebildeten Fahrwerkbaugruppe erforderlich. Die Fahrwerkbaugruppe hat daher den Vorteil, dass sie vollflächig mit einem Korrosionsschutz versehen werden kann, welcher beim weiteren Komplettieren erhalten bleibt.

Ein wirkungsvoller Korrosionsschutz ist bei Flanschgelenken und Mehrpunktlenkern besonders wichtig, weil diese aufgrund ihres Einbauorts im Fahrzeug korrosionsbegünstigenden Umgebungseinflüssen wie Feuchtigkeit und Streusalz in besonderem Maße ausgesetzt sind.

Bei engen umlaufenden Spalten besteht die Gefahr, dass diese nicht durch einen Oberflächenschutz vor Korrosion geschützt werden können, weil der Oberflächenschutz verfahrensbedingt nicht oder nur unzureichend in die engen Spalten eindringen kann. Bei einer Oberflächenbeschichtung durch Galvanisieren sowie bei der in der Automobilindustrie häufig eingesetzten Kathodischen Tauchlackierung (KTL-Verfahren) ist das Eindringvermögen in enge Spalten durch den so genannten Faradayschen Effekt begrenzt. Auch bei einer stromlosen Tauchlackierung sowie bei einer Spritzlackierung besteht die Gefahr, dass enge umlaufende Spalten nicht durch einen Oberflächenschutz geschlossen oder die den Spalt bildenden Oberflächen nicht oder nur unvollständig mit einem Oberflächenschutz bedeckt werden. Dringt Feuchtigkeit aus der Einbauumgebung von Fahrwerkbauteilen, wie beispielsweise aus Pfützen, über Kapillarwirkung in enge umlaufende Spalten ein, kann diese Feuchtigkeit bei nicht vollständig geschützten Oberflächen in den engen umlaufenden Spalten zu so genannter Spaltkorrosion führen. Zur Umgebung hin offene Umfangsbereiche zwischen der Innenwandung der Durchgangsöffnung und der dieser zugewandten Außenumfangsfläche des Kugelgelenkgehäuses, die nicht durch umlaufend widerstandsgeschweißte Linienzüge eingeschlossen sind, sind daher zur Vermeidung von Spaltkorrosion bevorzugt geöffnet ausgebildet. Unter einem geöffneten Umfangsbereich ist in diesem Zusammenhang ein vorzugsweise umlaufender Spalt zu verstehen, dessen Breite, auch Spaltmaß genannt, so groß ist, dass der Oberflächenschutz eindringen und die Oberfläche innerhalb des Spalts vollflächig bedecken kann.

Vorteilhaft ist das Kugelgelenkgehäuse Bestandteil eines Radialkugelgelenks, eines Axialkugelgelenks oder eines Kugelhülsengelenks. Kugelgelenkgehäuse der zuvor beschriebenen Art können als Gehäuse oder als Teil eines Gehäuses von Radialkugelgelenken, Axialkugelgelenken oder Kugelhülsengelenken ausgebildet sein. Ein bereits stoffschlüssig durch Schweißen mit einem Strukturbauteil verbundenes Kugelgelenkgehäuse erst anschließend weiter zu einem kompletten Kugelgelenk zu montieren, hat den Vorteil, dass innerhalb des Kugelgelenkgehäuses liegende Bauteile des Kugelgelenks, wie beispielsweise eine aus Kunststoff gebildete Lagerschale, nicht mehr durch die beim Schweißen entstehende Wärme geschädigt werden können.

Im Folgenden wird die Erfindung anhand lediglich ein Ausführungsbeispiel darstellender Zeichnungen näher erläutert, wobei sich gleiche Bezugszeichen auf gleiche, ähnliche oder funktional gleiche Bauteile oder Elemente beziehen. Dabei zeigt:
Fig. 1 eine Schnittdarstellung einer Fahrwerkbaugruppe gemäß der Erfindung;
Fig. 2 eine vergrößerte Detailansicht der Einzelheit X aus Figur 1;
Fig. 3 eine vergrößerte Detailansicht der Einzelheit X aus Figur 1, wobei das Kugelgelenkgehäuse nicht dargestellt ist;
Fig. 4 eine vergrößerte Detailansicht der Einzelheit X aus Figur 1, wobei das Strukturbauteil nicht dargestellt ist;
Fig. 5 eine Schnittdarstellung von Kugelgelenkgehäuse und Strukturbauteil unmittelbar vor dem Fügen der Fahrwerkbaugruppe und
Fig. 6 eine als Flanschgelenk ausgebildete Fahrwerkbaugruppe.

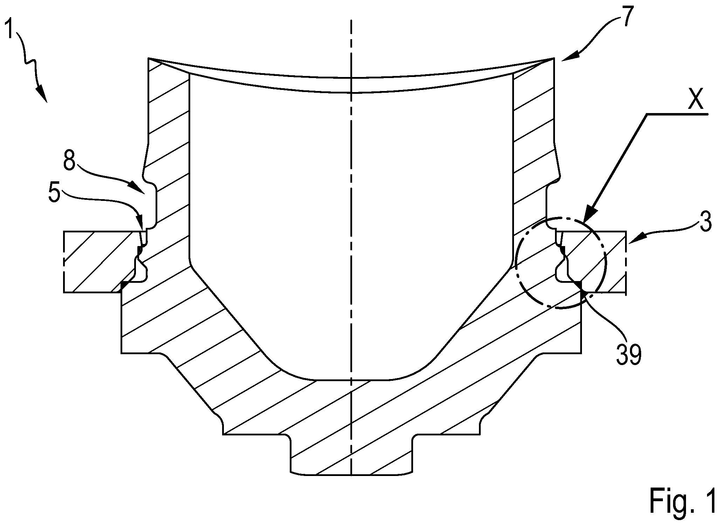

Fig. 1 zeigt eine Fahrwerkbaugruppe 1, welche ein Strukturbauteil 3 mit einer Durchgangsöffnung 5 und ein darin aufgenommenes Kugelgelenkgehäuse 7 aufweist. Das Kugelgelenkgehäuse 7 ist topfförmig mit einem hohlzylindrischen Teil und einem einstückig damit verbundenen Bodenteil ausgebildet und durch Kaltfließpressen hergestellt. Der Außenumfang des Kugelgelenkgehäuses 7 weist eine Dichtungsbalgnut 8 zur späteren Aufnahme eines Dichtungsbalges auf.

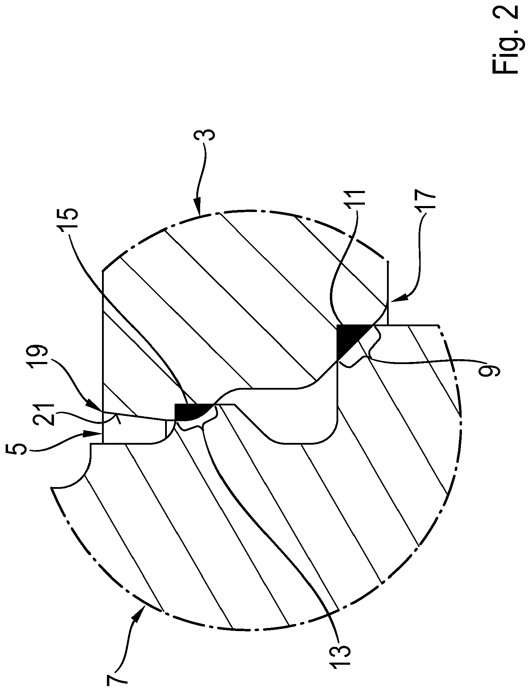

In Fig. 2 ist das Strukturbauteil 3 mit der Durchgangsöffnung 5 zu erkennen, in welche das Kugelgelenkgehäuse 7 eingesetzt wird. Der Außenumfang des Kugelgelenkgehäuses 7 ist umlaufend mit einem randseitigen Abschnitt 9 der Durchgangsöffnung 5 über eine durch Kondensatorentladungsschweißen hergestellte Widerstandsschweißung 11 verbunden. Das Kugelgelenkgehäuse 7 ist zur Stabilisierung in der Durchgangsöffnung 5 umlaufend mit einem von dem randseitigen Abschnitt 9 beabstandeten Innenwandungsabschnitt 13 der Durchgangsöffnung 5 durch eine zusätzliche Widerstandsschweißung 15 verbunden. Die umlaufende Verbindung des Außenumfangs des Kugelgelenkgehäuses 7 mit dem randseitigen Abschnitt 9 der Durchgangsöffnung 5 durch die Widerstandsschweißung 11 ist derart angeordnet, dass die Widerstandsschweißung 11 geringfügig von einem Rand 17 der Durchgangsöffnung 5 beabstandet ist.

Die umlaufende Widerstandsschweißung 11 und die umlaufende zusätzliche Widerstandsschweißung 15 zur Verbindung des Außenumfangs des Kugelgelenkgehäuses 7 mit dem Strukturbauteil 3 erstrecken sich parallel zu den Rändern 17, 19 der Durchgangsöffnung 5. Die zusätzliche Widerstandsschweißung 15 ist derart angeordnet, dass diese geringfügig von dem dem randseitigen Abschnitt 9 gegenüberliegenden Rand 19 der Durchgangsöffnung 5 beabstandet ist. Die Fügepartner Strukturbauteil 3 und Kugelgelenkgehäuse 7 weisen keine Oberflächenbeschichtung auf.

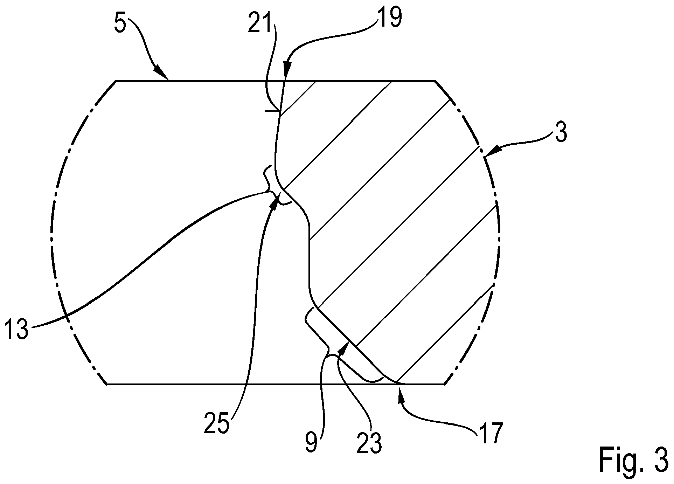

In Fig. 3 ist die Innenwandung 21 der Durchgangsöffnung 5 mit dem randseitigen Abschnitt 9 und dem Innenwandungsabschnitt 13 zu erkennen. Die Innenwandung 21 ist über ihre gesamte Erstreckung von einem Rand 17 bis zum gegenüberliegenden Rand 19 der Durchgangsöffnung 5 konturiert ausgebildet. Zur Herstellung der konturierten Innenwandung 21 wird zunächst die Durchgangsöffnung 5 durch Lochen mittels Stanzwerkzeug in das Strukturbauteil 3 eingebracht. Die Konturierung der Innenwandung 21 wird durch anschließendes Prägen fertiggestellt. Im Bereich des randseitigen Abschnitts 9 und im Bereich des Innenwandungsabschnitts 13 weist die konturierte Innenwandung 21 jeweils eine Schräge 23, 25 auf.

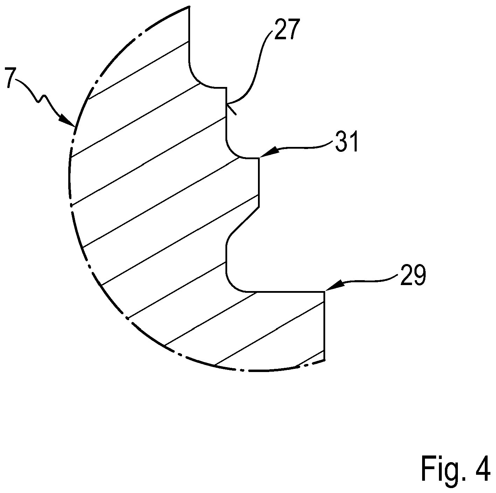

Fig. 4 zeigt die der Innenwandung 21 der Durchgangsöffnung 5 zugewandte Außenumfangsfläche 27 des Kugelgelenkgehäuses 7. Diese Außenumfangsfläche 27 ist ebenfalls konturiert ausgebildet und weist in ihrem Verlauf zwei Kanten 29, 31 auf. Die Kontur der Außenumfangsfläche 27 einschließlich der beiden Kanten 29, 31 sowie der in Fig. 1 vollständig dargestellten Dichtungsbalgnut 8 wird durch Drehen in einer Aufspannung hergestellt. Dabei sind die relative Lage der Kanten 29, 31 sowie die Form der Kanten relativ eng toleriert. Eine Fertigstellung dieser Kontur im Fließpressverfahren ist aufgrund von hinterschnittigen Geometriebereichen nicht möglich.

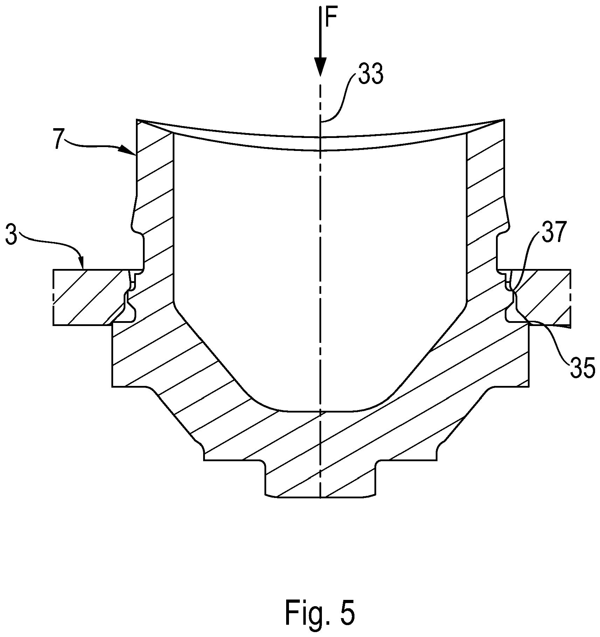

In Fig. 5 ist unter Hinzuziehung von Fig. 3 und Fig. 4 zu erkennen, dass das Strukturbauteil 3 und das Kugelgelenkgehäuse 7 als Vorbereitung zum Fügen entlang einer Fügeachse 33 derart zusammengeführt werden, dass sich die Innenwandung 21 der Durchgangsöffnung 5 und die dieser zugewandte Außenumfangsfläche 27 des Kugelgelenkgehäuses 7 gleichzeitig in einem ersten 35 geschlossenen und einem zweiten 37 geschlossenen Linienzug berühren. Die Mittelachse des Kugelgelenkgehäuses 7 und die Mittelachse der Durchgangsöffnung 5 sind deckungsgleich mit der Fügeachse 33. Die Konturierung der Innenwandung 21 der Durchgangsöffnung 5 und der dieser zugewandten Außenumfangsfläche 27 des Kugelgelenkgehäuses 7 sind derart ausgebildet, dass bei Berührung im Bereich der Linienzüge 35, 37, bei Betrachtung in dem dargestellten Längsschnitt durch die Fügeachse 33, jeweils eine Kante 29, 31 auf eine Schräge 23, 25 trifft. Dabei ist die Kante 29 der Schrägen 23 und die Kante 31 der Schrägen 25 zugeordnet. Die Kante 29 und die Schräge 23 berühren sich in dem ersten umlaufenden Linienzug 35. Die Kante 31 und die Schräge 25 berühren sich in dem zweiten umlaufenden Linienzug 37. Die Kanten 29, 31 sind rechtwinklig mit in Richtung der Fügeachse 33 und senkrecht dazu verlaufenden Schenkeln ausgebildet. Die Kanten 29, 31 schließen also einen Winkel von 90° ein. Der Winkel zwischen der Schrägen 23, 25 und dem ersten Schenkel der Kanten 29, 31 beträgt jeweils 45° und ist jeweils gleich groß wie der Winkel, der von der Schräge 23, 25 und dem jeweils zweiten Schenkel der Kante 29, 31 eingeschlossen wird.

Unmittelbar vor dem Widerstandsschweißen werden das Strukturbauteil 3 und das Kugelgelenkgehäuse 7 mit einer entlang der Fügeachse 33 wirkenden Vorspannkraft F beaufschlagt, um die Kanten 29, 31 im Bereich der Linienzüge 35, 37 mit den zugeordneten Schrägen 23, 25 zur Anlage zu bringen, falls dies bedingt durch Fertigungstoleranzen noch nicht vollständig der Fall sein sollte. Die dem Kugelgelenkgehäuse 7 zugeordneten Kanten 29, 31 werden im Rahmen des abschließenden Zerspanens relativ scharfkantig ausgebildet, damit sich diese unter Einwirkung der Vorspannkraft F relativ leicht verformen und dadurch mit den zugeordneten Schrägen 23, 25 zur Anlage bringen lassen.

Die Verbindung zwischen dem Strukturbauteil 3 und dem Kugelgelenkgehäuse 7 ist bereichsweise durch ein stoffschlüssiges Fügen mit Zusatzwerkstoff verstärkt. Fig. 1 zeigt eine als MAG-Schweißung ausgebildete partielle Schutzgasschweißung 39, die als Kehlnaht ausgeführt und nicht umlaufend ist.

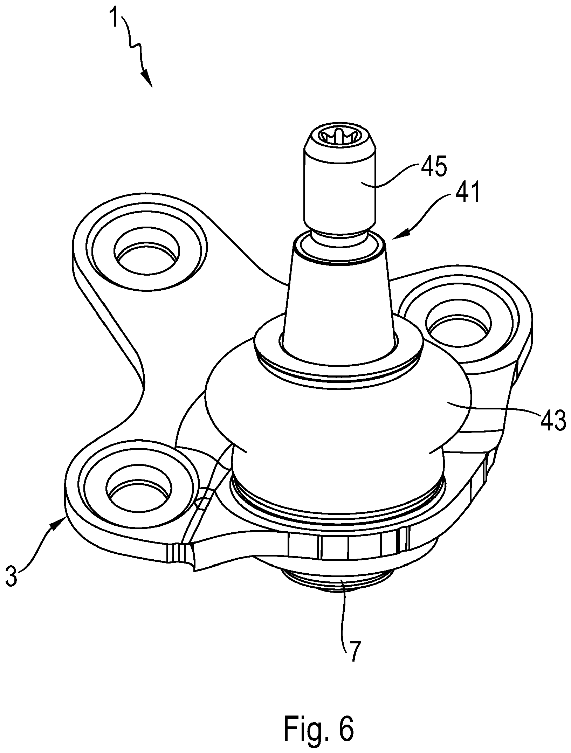

Fig. 6 zeigt eine als Flanschgelenk 1 ausgebildete Fahrwerkbaugruppe aufweisend ein Radialkugelgelenk 41 und ein als Anbindungsflansch 3 ausgebildetes Strukturbauteil. Das Kugelgelenkgehäuse 7 ist größtenteils durch einen Dichtungsbalg 43 abgedeckt, welcher mit einem Ende in die nicht sichtbare Dichtungsbalgnut 8 des Kugelgelenkgehäuses 7 eingreift. Aus dem Dichtungsbalg 43 heraus erstreckt sich ein Ende eines Kugelzapfens 45, dessen gegenüberliegendes Ende eine Gelenkkugel aufweist, welche in dem Kugelgelenkgehäuse 7 dreh- und schwenkbar aufgenommen ist.

### Bezugszeichen

- 1: Fahrwerkbaugruppe, Flanschgelenk
- 3: Strukturbauteil, Anbindungsflansch
- 5: Durchgangsöffnung
- 7: Kugelgelenkgehäuse
- 8: Dichtungsbalgnut
- 9: randseitiger Abschnitt
- 11: Widerstandsschweißung
- 13: Innenwandungsabschnitt
- 15: zusätzliche Widerstandsschweißung
- 17: Rand der Durchgangsöffnung
- 19: Rand der Durchgangsöffnung
- 21: Innenwandung der Durchgangsöffnung
- 23: Schräge
- 25: Schräge
- 27: Außenumfangsfläche
- 29: Kante
- 31: Kante
- 33: Fügeachse
- 35: erster Linienzug
- 37: zweiter Linienzug
- 39: Schutzgasschweißung, MAG-Schweißung
- 41: Radialkugelgelenk
- 43: Dichtungsbalg
- 45: Kugelzapfen

- F: Vorspannkraft

## Patentansprüche

1. Verfahren zur Herstellung einer Fahrwerkbaugruppe (1) aufweisend ein Strukturbauteil (3) mit einer Durchgangsöffnung (5), in welche ein Kugelgelenkgehäuse (7) eingesetzt wird, wobei der Außenumfang des Kugelgelenkgehäuses (7) umlaufend mit einem randseitigen Abschnitt (9) der Durchgangsöffnung (5) durch stoffschlüssiges Fügen (11) ohne Zusatzwerkstoff verbunden wird, **dadurch gekennzeichnet, dass** das Kugelgelenkgehäuse (7) zur Stabilisierung in der Durchgangsöffnung (5) zusätzlich umlaufend mit zumindest einem von dem randseitigen Abschnitt (9) beabstandeten Innenwandungsabschnitt (13) der Durchgangsöffnung (5) ebenfalls durch stoffschlüssiges Fügen (15) ohne Zusatzwerkstoff verbunden wird, wobei die zusätzliche Verbindung (15) geringfügig von dem dem randseitigen Abschnitt (9) gegenüberliegenden Rand (19) der Durchgangsöffnung (5) beabstandet ist.

2. Verfahren nach Anspruch 1, **dadurch gekennzeichnet, dass** die Innenwandung (21) der Durchgangsöffnung (5) und/oder die dieser zugewandte Außenumfangsfläche (27) des Kugelgelenkgehäuses (7) zumindest vor dem Fügen konturiert ausgebildet ist oder sind.

3. Verfahren nach Anspruch 2, **dadurch gekennzeichnet, dass** die Innenwandung (21) der Durchgangsöffnung (5) durch Umformen, insbesondere durch Prägen, fertiggestellt wird.

4. Verfahren nach Anspruch 2 oder 3, **dadurch gekennzeichnet, dass** die der Innenwandung (21) der Durchgangsöffnung (5) zugewandte Außenumfangsfläche (27) des Kugelgelenkgehäuses (7) durch ein abschließendes Zerspanen, insbesondere ein Zerspanen in einer Aufspannung, fertiggestellt wird.

5. Verfahren nach einem der Ansprüche 2 bis 4, **dadurch gekennzeichnet, dass** das Strukturbauteil (3) und das Kugelgelenkgehäuse (7) als Vorbereitung zum Fügen entlang einer Fügeachse (33) derart zusammengeführt werden, dass sich die Innenwandung (21) der Durchgangsöffnung (5) und die dieser zugewandte Außenumfangsfläche (27) des Kugelgelenkgehäuses (7) gleichzeitig in einem ersten (35), vorzugsweise geschlossenen, und zumindest einem zweiten (37), vorzugsweise geschlossenen, Linienzug berühren.

6. Verfahren nach Anspruch 5, **dadurch gekennzeichnet, dass** zumindest zwei Linienzüge (35, 37) parallel zueinander und in Richtung der Fügeachse (33) versetzt angeordnet sind.

7. Verfahren nach Anspruch 5 oder 6, **dadurch gekennzeichnet, dass** die Mittelachse des Kugelgelenkgehäuses (7) und die Mittelachse der Durchgangsöffnung (5) deckungsgleich mit der Fügeachse (33) sind.

8. Verfahren nach einem der Ansprüche 5 bis 7, **dadurch gekennzeichnet, dass** die Konturierung der Innenwandung (21) der Durchgangsöffnung (5) und/oder der dieser zugewandten Außenumfangsfläche (27) des Kugelgelenkgehäuses (7) derart ausgebildet ist oder sind, dass bei Berührung im Bereich der Linienzüge (35, 37), bei Betrachtung in einem Längsschnitt durch die Fügeachse (33), jeweils eine Kante (29, 31) auf eine Schräge (23, 25) trifft.

9. Verfahren nach einem der Ansprüche 5 bis 8, **dadurch gekennzeichnet, dass** das Strukturbauteil (3) und das Kugelgelenkgehäuse (7) unmittelbar vor dem Fügen mit einer entlang der Fügeachse (33) wirkenden Vorspannkraft (F) beaufschlagt werden, um die Kanten (29, 31) im Bereich der Linienzüge (35, 37) mit den zugeordneten Schrägen (23, 25) vollständig zur Anlage zu bringen.

10. Verfahren nach einem der vorhergehenden Ansprüche, **dadurch gekennzeichnet, dass** das stoffschlüssige Fügen ohne Zusatzwerkstoff durch Widerstandsschweißen (11, 15), insbesondere durch Kondensatorentladungsschweißen, erfolgt.

11. Verfahren nach einem der vorhergehenden Ansprüche, **dadurch gekennzeichnet, dass** die Verbindung zwischen dem Strukturbauteil (3) und dem Kugelgelenkgehäuse (7) zumindest bereichsweise durch ein stoffschlüssiges Fügen (39) mit Zusatzwerkstoff verstärkt wird.

12. Verfahren nach Anspruch 11, **dadurch gekennzeichnet, dass** das stoffschlüssige Fügen mit Zusatzwerkstoff durch Schutzgasschweißen (39), insbesondere durch MAG-Schweißen, erfolgt.

13. Fahrwerkbaugruppe (1) aufweisend ein Strukturbauteil (3) und ein Kugelgelenkgehäuse (7), hergestellt nach einem Verfahren gemäß einem der vorhergehenden Ansprüche, **dadurch gekennzeichnet, dass** die Fahrwerkbaugruppe als Flanschgelenk (1) oder als Mehrpunktlenker ausgebildet ist.

14. Fahrwerkbaugruppe (1) nach Anspruch 13, **dadurch gekennzeichnet, dass** das Kugelgelenkgehäuse (7) Bestandteil eines Radialkugelgelenks (41), eines Axialkugelgelenks oder eines Kugelhülsengelenks ist.

## Claims

1. Method for producing a chassis assembly (1) having a structural component (3) with a through-opening (5) into which a ball joint housing (7) is inserted, wherein the outer circumference of the ball joint housing (7) is peripherally connected to a marginal portion (9) of the through-opening (5) by materially bonded joining (11) without filler material, **characterized in that**, for stabilization in the through-opening (5), the ball joint housing (7) is additionally peripherally connected to at least one inner wall portion (13) of the through-opening (5) that is spaced apart from the marginal portion (9), likewise by materially bonded joining (15) without filler material, wherein the additional connection (15) is spaced apart slightly from the edge (19) of the through-opening (5) that is situated opposite to the marginal portion (9).

2. Method according to Claim 1, **characterized in that** the inner wall (21) of the through-opening (5) and/or the outer circumferential surface (27) of the ball joint housing (7) that faces the latter are/is designed to be contoured at least before the joining operation.

3. Method according to Claim 2, **characterized in that** the inner wall (21) of the through-opening (5) is completed by forming, in particular by stamping.

4. Method according to Claim 2 or 3, **characterized in that** the outer circumferential surface (27) of the ball joint housing (7) that faces the inner wall (21) of the through-opening (5) is completed by a finish-machining operation, in particular a machining operation in one set-up.

5. Method according to one of Claims 2 to 4, **characterized in that**, as a preparation for joining, the structural component (3) and the ball joint housing (7) are guided together along a joining axis (33) in such a way that the inner wall (21) of the through-opening (5) and the outer circumferential surface (27) of the ball joint housing (7) that faces the latter are simultaneously in contact in a first (35), preferably closed, polyline and at least one second (37), preferably closed, polyline.

6. Method according to Claim 5, **characterized in that** at least two polylines (35, 37) are arranged parallel to one another and offset in the direction of the joining axis (33).

7. Method according to Claim 5 or 6, **characterized in that** the centre axis of the ball joint housing (7) and the centre axis of the through-opening (5) are congruent with the joining axis (33).

8. Method according to one of Claims 5 to 7, **characterized in that** the contouring of the inner wall (21) of the through-opening (5) and/or of the outer circumferential surface (27) of the ball joint housing (7) that faces the latter are/is designed in such a way that, upon contact in the region of the polylines (35, 37), as viewed in a longitudinal section through the joining axis (33), in each case an edge (29, 31) meets a slope (23, 25).

9. Method according to one of Claims 5 to 8, **characterized in that**, directly before the joining operation, the structural component (3) and the ball joint housing (7) are subjected to a prestressing force (F) acting along the joining axis (33) in order to bring the edges (29, 31) in the region of the polylines (35, 37) completely into contact with the assigned slopes (23, 25).

10. Method according to one of the preceding claims, **characterized in that** the materially bonded joining occurs without filler material by resistance welding (11, 15), in particular by capacitor discharge welding.

11. Method according to one of the preceding claims, **characterized in that** the connection between the structural component (3) and the ball joint housing (7) is reinforced at least in certain regions by materially bonded joining (39) with filler material.

12. Method according to Claim 11, **characterized in that** the materially bonded joining occurs with filler material by shielded arc welding (39), in particular by MAG welding.

13. Chassis assembly (1) having a structural component (3) and a ball joint housing (7), produced according to a method according to one of the preceding claims, **characterized in that** the chassis assembly is designed as a flanged joint (1) or as a multipoint link.

14. Chassis assembly (1) according to Claim 13, **characterized in that** the ball joint housing (7) is a constituent part of a radial ball joint (41), of an axial ball joint or of a ball sleeve joint.

## Revendications

1. Procédé de fabrication d'un ensemble de châssis (1) comprenant un composant structural (3) doté d'une ouverture traversante (5) dans laquelle est inséré un boîtier d'articulation à rotule (7), la périphérie extérieure du boîtier d'articulation à rotule (7) étant reliée de manière périphérique à une partie (9) côté bordure de l'ouverture traversante (5) par assemblage (11) par liaison de matière sans matériau d'apport, **caractérisé en ce que** le boîtier d'articulation à rotule (7) est, pour la stabilisation dans l'ouverture traversante (5), en outre relié de manière périphérique à au moins une partie de paroi intérieure (13), espacée de la partie (9) côté bordure, de l'ouverture traversante (5) également par assemblage (15) par liaison de matière sans matériau d'apport, la liaison supplémentaire (15) étant légèrement espacée du bord (19) de l'ouverture traversante (5) opposé à la partie (9) côté bordure.

2. Procédé selon la revendication 1, **caractérisé en ce que** la paroi intérieure (21) de l'ouverture traversante (5) et/ou la surface périphérique extérieure (27), tournée vers celle-ci, du boîtier d'articulation à rotule (7) est ou sont formée (s) de manière profilée au moins avant l'assemblage.

3. Procédé selon la revendication 2, **caractérisé en ce que** la paroi intérieure (21) de l'ouverture traversante (5) est achevée par déformation, en particulier par estampage.

4. Procédé selon la revendication 2 ou 3, **caractérisé en ce que** la surface périphérique extérieure (27), tournée vers la paroi intérieure (21) de l'ouverture traversante (5), du boîtier d'articulation à rotule (7) est achevée par un usinage final, en particulier un usinage avec un serrage.

5. Procédé selon l'une des revendications 2 à 4, **caractérisé en ce que** le composant structural (3) et le boîtier d'articulation à rotule (7) sont, en tant que préparation pour l'assemblage, assemblés le long d'un axe d'assemblage (33) de telle sorte que la paroi intérieure (21) de l'ouverture traversante (5) et la surface périphérique extérieure (27), tournée vers celle-ci, du boîtier d'articulation à rotule (7) soient en contact simultanément le long d'une première ligne polygonale (35) de préférence fermée, et le long d'au moins une deuxième ligne polygonale (37) de préférence fermée.

6. Procédé selon la revendication 5, **caractérisé en ce qu'**au moins deux lignes polygonales (35, 37) sont disposées parallèlement l'une à l'autre de manière décalée dans la direction de l'axe d'assemblage (33).

7. Procédé selon la revendication 5 ou 6, **caractérisé en ce que** l'axe médian du boîtier d'articulation à rotule (7) et l'axe médian de l'ouverture traversante (5) sont en coïncidence avec l'axe d'assemblage (33).

8. Procédé selon l'une des revendications 5 à 7, **caractérisé en ce que** le profilage de la paroi intérieure (21) de l'ouverture traversante (5) et/ou de la surface périphérique extérieure (27), tournée vers celle-ci, du boîtier d'articulation à rotule (7) est ou sont formé(s) de telle sorte que lors du contact dans la région des lignes polygonales (35, 37), considéré dans une section longitudinale passant par l'axe d'assemblage (33), respectivement un bord (29, 31) rencontre un biseau (23, 25) .

9. Procédé selon l'une des revendications 5 à 8, **caractérisé en ce que** le composant structural (3) et le boîtier d'articulation à rotule (7) sont, immédiatement avant l'assemblage, soumis à une force de précontrainte (F) agissant le long de l'axe d'assemblage (33), afin d'amener les bords (29, 31) dans la région des lignes polygonales (35, 37) complètement en appui sur les biseaux (23, 25) associés.

10. Procédé selon l'une des revendications précédentes, **caractérisé en ce que** l'assemblage par liaison de matière sans matériau d'apport s'effectue par soudage par résistance (11, 15), en particulier par soudage par décharge de condensateur.

11. Procédé selon l'une des revendications précédentes, **caractérisé en ce que** la liaison entre le composant structural (3) et le boîtier d'articulation à rotule (7) est renforcée au moins dans certaines zones par un assemblage (39) par liaison de matière avec matériau d'apport.

12. Procédé selon la revendication 11, **caractérisé en ce que** l'assemblage par liaison de matière avec matériau d'apport s'effectue par soudage sous gaz protecteur (39), en particulier par soudage MAG (soudage à l'arc sous protection de gaz actif avec métal d'apport).

13. Ensemble de châssis (1) comprenant un composant structural (3) et un boîtier d'articulation à rotule (7), fabriqué suivant un procédé selon l'une des revendications précédentes, **caractérisé en ce que** l'ensemble de châssis est réalisé en tant qu'articulation à bride (1) ou en tant que bras à plusieurs points.

14. Ensemble de châssis (1) selon la revendication 13, **caractérisé en ce que** le boîtier d'articulation à rotule (7) fait partie d'une articulation à rotule radiale (41), d'une articulation à rotule axiale ou d'une articulation à douille sphérique.
